# EUROPEAN PATENT APPLICATION

(11) **EP 3 907 693 A1**
(43) Date of publication of application: **10.11.2021**
(21) Application number: 19906623.4
(22) Date of filing: 27.12.2019
(51) Int. Cl.: G06Q 50/26

(54) **INFORMATION PROCESSING DEVICE, INFORMATION PROCESSING METHOD, AND INFORMATION PROCESSING PROGRAM**

(30) Priority: 31.12.2018 US 201862786721 P
(71) Applicant: Sony Group Corporation, Minato-ku, Tokyo 108-0075 (JP)
(72) Inventor: YOSHII, Kengo, Tokyo 108-0075 (JP); SUZUKI, Noriyuki, Tokyo 108-0075 (JP); MIZUMURA, Hironari, Tokyo 108-0075 (JP); PARK, Angie, San Mateo, California 94404 (US); OGISHITA, Naoki, San Mateo, California 94404 (US)
(74) Representative: MFG Patentanwälte Meyer-Wildhagen Meggle-Freund Gerhard PartG mbB
(86) International application number: PCT/JP2019/051628
(87) International publication number: WO 2020/141610

(57) **Abstract**

An information processing device (1) including a control unit (2) configured to: store, in a block chain (BC), a common key by using which information on a document including sensitive information on a user is encrypted; and based on information on the common key stored in the block chain (BC), display a submission status of the document on a screen of a user terminal (10) that is used by the user.

## Description

### Field

The present disclosure relates to an information processing device, an information processing method, and an information processing program.

### Background

Conventionally, for example, there has been known various support programs for providing, to a user (for example, disconnected youth) such as young people not in employment or not in education, support in employment or education. Moreover, there has been proposed a technology for managing application documents for the above-mentioned support programs (see Patent Literature 1, for example).

### Citation List

### Patent Literature

Patent Literature 1: JP 2016-157439 A

### Summary

### Technical Problem

However, the conventional technology has room for improvement in more appropriately informing of statuses of managed documents of a user.

Thus, in the present disclosure, there are proposed an information processing device, an information processing method, and an information processing program capable of more appropriately informing of statuses of managed documents of a user.

### Solution to Problem

In order to solve the above-mentioned problem, an information processing device according to one aspect of the present disclosure includes a control unit configured to: store, in a block chain, a common key by using which information on a document including sensitive information on a user is encrypted; and based on information on the common key stored in the block chain, display a submission status of the document on a screen of a user terminal that is used by the user.

### Brief Description of Drawings

FIG. 1 is a diagram illustrating relationship between institutions and a user in a support system according to an embodiment.
FIG. 2 is a diagram illustrating a configuration of the support system including an information processing device according to the embodiment.
FIG. 3 is a block diagram illustrating a configuration of the information processing device according to the embodiment.
FIG. 4 is a block diagram illustrating a configuration of a user terminal according to the embodiment.
FIG. 5 is a block diagram illustrating a configuration of a support-institution terminal according to the embodiment.
FIG. 6 is a block diagram illustrating a configuration of a management-institution terminal according to the embodiment.
FIG. 7 is a diagram illustrating a screen example displayed on the user terminal.
FIG. 8 is a sequence diagram illustrating an operation example of the support system according to the embodiment.
FIG. 9 is a sequence diagram illustrating an operation example of the support system according to the embodiment.
FIG. 10 is a block diagram illustrating one example of a hardware configuration of the information processing device according to the present embodiment.

### Description of Embodiments

The following describes preferable embodiments of the present disclosure in detail with reference to the attached drawings. In the present specification and the drawings, overlap of descriptions will be avoided by providing the same reference signs for constituent elements having substantially the same functional configuration.

In the present specification and drawings, a plurality of constituent elements having substantially the same functional configuration is distinguished by providing thereto respective different numbers after the same reference symbol. Note that when there presents no need for distinguishing the plurality of constituent elements having substantially the same functional configuration, the same reference symbol alone is provided thereto.

Hereinafter, an information processing device, an information processing method, and an information processing program according to an embodiment will be explained while exemplifying a support system in which a support institution provides a support program to a user.

For example, the above-mentioned support system means a system in which a support institution such as a public educational institution provides, to a user such as young people not in employment or not in education, support in employment or education. Note that the user such as young people not in employment or not in education may be referred to as disconnected youth.

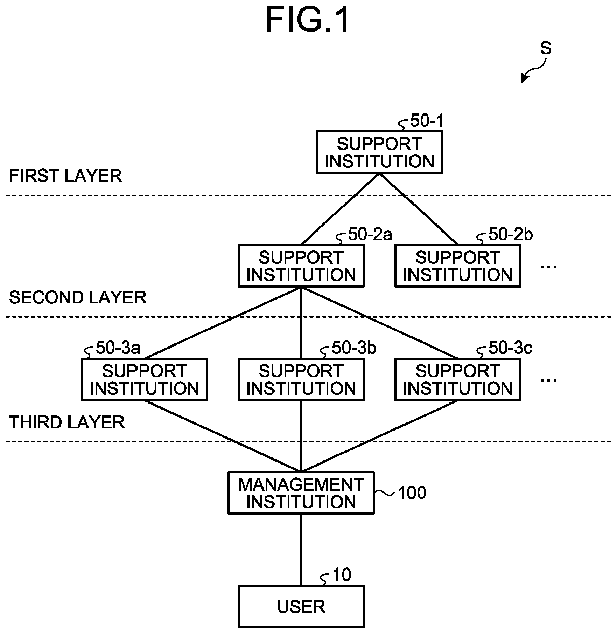

First, with reference to FIG. 1, relationship between institutions and a user in the support system will be explained. FIG. 1 is a diagram illustrating relationship between institutions and a user in the support system according to the embodiment. As illustrated in FIG. 1, a support system S is constituted of support institutions 50, a management institution 100, and a user 10, for example. Note that support institutions 50-1, 50-2a, 50-2b, and 50-3a to 50-3c are collectively referred to as the support institutions 50.

The support institutions 50 are stakeholders and/or public educational institutions, for example, and are classified into a plurality of layers. Note that in FIG. 1, a case is exemplified in which the plurality of support institutions 50 is classified into from a first layer up to a third layer; however, the number of the layers may be equal to or less than two, or may be equal to or more than four.

The support institution 50-1 in a first layer is a support institution that manages the support institutions 50-2a and 50-2b in a second layer, and corresponds to, for example, a prefecture in Japan or a state in the U.S. Moreover, the support institution 50-1 is an institution that decides the outline (for example, directions of supports, total budget allocated to support programs, etc.) of the support programs so as to inform the support institutions 50-2a and 50-2b in the second layer of directions of supports and to allocate budgets thereto, on the basis of the decided outline.

The support institutions 50-2a and 50-2b in the second layer are support institutions that manage the support institutions 50-3a to 50-3c in a third layer, and correspond to, for example, municipalities in Japan or counties in the U.S. The support institutions 50-2a and 50-2b in the second layer are institutions that allocate budgets to the support institutions 50-3a to 50-3c in the third layer on the basis of budgets allocated by the support institution 50-1 in the first layer.

The support institutions 50-3a to 50-3c in the third layer are institutions that plan and provide specific contents of support programs on the basis of budgets and directions of supports allocated by the support institutions 50-2a and 50-2b in the second layer, and are classified for each kind (support for employment, support for education, etc.) of a support program. When there presents an application for a support program from the user 10, on the basis of a document submitted from the user 10 at the application, the support institutions 50-3a to 50-3c in the third layer decide whether or not to permit him/her to join the support program.

The management institution 100 mediates or supports an application of the user 10 for a support program. For example, the management institution 100 informs the user 10 of presence of a support program provided by the support institutions 50-3a to 50-3c in the third layer, or collect, when there presents an application for a support program from the user 10, documents needed for the application for the support program. The management institution 100 submits, instead of the user 10, the collected document to the support institutions 50-3a to 50-3c in the third layer so as to execute an application for the support program. The management institution 100 receives information on an application result from the support institutions 50-3a to 50-3c in the third layer, and further informs the user 10 of the application result.

Incidentally, the above-mentioned document is a document that includes sensitive personal information (sensitive information) on the user 10. Specifically, the sensitive information contains a name, date of birth, an address, a family configuration, a face photo, a telephone number, an annual income, a transcript of school records, an individual number (Japan), a social security number (U.S.), and the like of the user 10.

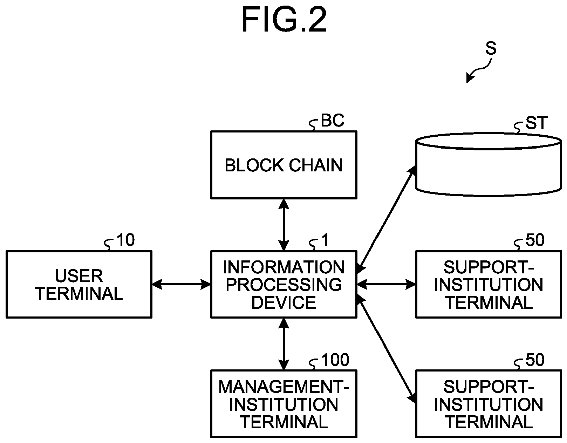

In the support system S as described above, an information processing device according to the embodiment has a function for managing a document that is submitted to the management institution 100 by the user 10. This point will be explained with reference to FIG. 2.

FIG. 2 is a diagram illustrating a configuration of the support system S including an information processing device 1 according to the embodiment. As illustrated in FIG. 2, the support system S according to the embodiment includes the information processing device 1, a user terminal 10, a support-institution terminal 50, a management-institution terminal 100, a block chain BC, and a storage ST.

The information processing device 1 is a server device that is communicably connected to the user terminal 10, the support-institution terminal 50, the management-institution terminal 100, the block chain BC, and the storage ST so as to transmit and receive various kinds of information. For example, the information processing device 1 is a physical server or a virtual server.

The user terminal 10 is a terminal device that is operated by the user 10. The user terminal 10 is, for example, a smartphone, a desktop-type Personal Computer (PC), a laptop PC, a tablet-type terminal, a mobile telephone, a Personal Digital Assistant (PDA), a wearable device, etc. Hereinafter, "user terminal 10" and "user" are distinguished from each other by using a reference symbol.

The support-institution terminal 50 is a terminal device that is operated by a staff of the support institutions 50. The support-institution terminal 50 is, for example, a smartphone, a desktop-type PC, a laptop PC, a tablet-type terminal, a mobile telephone, a PDA, a wearable device, etc. Hereinafter, "support-institution terminal 5" and "support institution" are distinguished from each other by using a reference symbol.

The management-institution terminal 100 is a terminal device operated by a staff of the management institution 100. The management-institution terminal 100 is, for example, a smartphone, a desktop-type PC, a laptop PC, a tablet-type terminal, a mobile telephone, a PDA, a wearable device, etc. Hereinafter, "management-institution terminal 100" and "management institution" are distinguished from each other by using a reference symbol.

The block chain BC is a distributed ledger technology or a distributed network. Details will be mentioned later, in the support system S, the block chain BC stores therein information on a key (encrypted common key) by using which a document is encrypted, information on a sender and a destination of the above-mentioned key, an access history to the information on the stored key, etc.

The storage ST is a storage that stores therein various kinds of information. The storage ST may be a storage of the information processing device 1, or may be a storage of the support-institution terminal 50, a storage of the management-institution terminal 100, or a storage of another server device. Details will be mentioned later, in the support system S, the storage ST stores therein information on encrypted documents.

Next, an operation example of the support system S will be explained with reference to FIG. 2.

First, the user terminal 10 transmits, to the information processing device 1, an account registering request for registering an account related to the support system S. When receiving an account registering request, the information processing device 1 transmits, to the user terminal 10, information on an input screen for inputting user information so as to cause the user terminal 10 to display the information on its screen. The above-mentioned input screen includes items for inputting information (name, date of birth, address, etc.) on attributes of a user.

The information processing device 1 generates an account on the basis of user information input to the input screen, and informs the user terminal 10 of account information including a login ID and a password.

When acquiring the account information, the user terminal 10 generates a private key and a public key. A private key and a public key are generated for each account (each user), and the private key is used in a decoding process to be mentioned later and the public key is used in an encryption process to be mentioned later. Similarly, the management-institution terminal 100 generates a private key and a public key.

Next, the information processing device 1 acquires, from the support-institution terminal 50, information related to a support program, and informs a management terminal device 100 of the acquired information. When receiving, from the information processing device 1, a notification related to the support program, the management terminal device 100 informs the user 10 requiring the above-mentioned support program of presence of the support program. The management terminal device 100 may inform all of the preliminarily-registered users 10 of presence of the support program.

For example, the management terminal device 100 may execute a notification on the user terminal 10 via the information processing device 1 (for example, by using function of Short Message Service (SMS), chat function, etc.), or may directly execute a notification on the user terminal 10.

When there presents a notification from the management terminal device 100, the user terminal 10 acquires information related to a support program(s) from the information processing device 1 in accordance with operation of a user, and displays the acquired information on its screen.

When receiving a selecting operation of a desired support program by a user from among support programs displayed on the screen, the user terminal 10 transmits, to the information processing device 1, an application request for the selected support program.

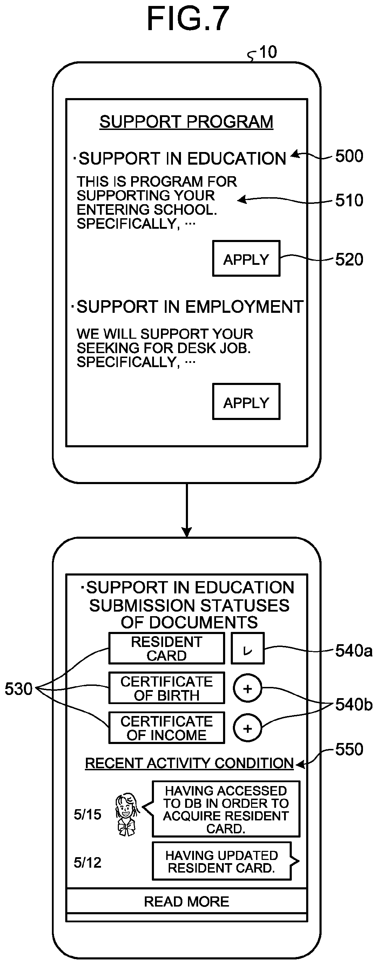

The information processing device 1 informs the management-institution terminal 100 of the fact that there presents an application request, and further informs the user terminal 10 of information on a document (hereinafter, may be referred to as "required document") required for an application of the support program. When informing of the information on the required document, the information processing device 1 further informs of information on whether or not the required document has been already submitted with reference to past registration of support programs and the like, details of this point will be mentioned later with reference to FIG. 7.

When there presents a non-submitted document (hereinafter, may be referred to as missed document), the user terminal 10 uploads the missed document to the information processing device 1 in accordance with an operation of a user. Note that the missed document may be information in a form of data obtained by scanning, or may be information on a document that is transmitted from an institution having issued the document, for example.

When uploading a missed document, the user terminal 10 executes a predetermined encryption process. Details of the encryption process will be explained.

In the encryption process, the following two encryptions are mainly executed.
(1) Encryption of Document to be Uploaded
(2) Encryption of Key Used in Encryption of Document

### (1) Encryption of Document to be Uploaded

When uploading a missed document to the information processing device 1, the user terminal 10 transmits an upload request to the information processing device 1. When receiving an upload request, the information processing device 1 generates a common key (Symmetric key) for each document, and transmits the generated common key to the user terminal 10. Note that the common key may be generated by the user terminal 10.

Next, the user terminal 10 encrypts a document to be uploaded by using the received common key. When there presents a plurality of documents to be uploaded, the user terminal 10 executes the encryption for each of the documents.

### (2) Encryption of Key (Common Key) Used in Encryption of Document

The user terminal 10 encrypts a document by using a common key, and then encrypts the common key by using a public key. The public key used in the encryption may be a public key of a management institution, or a public key of a user him/herself.

### (2-1) Case of Encryption Using Public Key of Management Institution

When a management institution, which is a submission destination of a document, is decided, the user terminal 10 acquires a public key of the above-mentioned management institution from the information processing device 1, and encrypts the document by using the acquired public key of the management institution. In other words, when uploading a missed document in an application for a support program, a management institution is decided which is a submission destination of a document, and thus the user terminal 10 executes encryption by using a public key of the above-mentioned management institution.

### (2-2) Case of Encryption Using Public Key of User

When a submission destination of a document is not decided, in other words, when preliminarily uploading a document to the information processing device 1 in preparation for a future application for a support program, the user terminal 10 encrypts a common key by using a public key of a user him/herself. In this case, when a management institution to be a submission destination of a document is decided, a common key (encrypted) is acquired from the information processing device 1, decryption is executed by using a private key of him/herself, and then encryption is again executed by using the public key of the management institution to be the submission destination.

The user terminal 10 transmits, to the information processing device 1, the encrypted document and the encrypted common key. The information processing device 1 stores the encrypted document in the storage ST, and further stores the encrypted common key in the block chain BC.

Moreover, when storing an encrypted common key in the block chain BC, the information processing device 1 also stores information for identifying a sender (user) of the common key, information identifying a submission destination (management institution) of the common key, and information for identifying a document.

In other words, the information processing device 1 stores a document and a common key in a dispersed manner. Moreover, the information processing device 1 individually encrypts a document and a common key, and they are able to be decoded by using a private key alone that is stored in a terminal of a management institution (or user), so that it is possible to prevent leakage of the document and the common key to a third party.

Next, processes until the management-institution terminal 100 acquires a document stored in the storage ST will be explained.

The management-institution terminal 100 transmits, to the information processing device 1, an acquisition request for a document of a user and a common key. The above-mentioned acquisition request includes information for identifying a user, information for identifying a management institution, and information for identifying a document.

On the basis of the received acquisition request, the information processing device 1 acquires an encrypted document from the storage, and further acquires an encrypted common key from the block chain BC. Next, the information processing device 1 transmits, to the management-institution terminal 100, the acquired document and the acquired common key.

Specifically, when information for identifying a management institution included in an acquisition request received from the management-institution terminal 100 coincides with information for identifying a management institution to be a submission destination of a common key included in information on the common key stored in the block chain BC, the information processing device 1 transmits information on the common key to the management-institution terminal 100.

The management-institution terminal 100 decodes a common key (encrypted) acquired from the information processing device 1 by using its own private key. Next, the management-institution terminal 100 decodes a document (encrypted) by using the decoded common key. Thus, a management institution is capable of acquiring a document of a user.

As described above, in the support system S, the user terminal 10 encrypts a common key by using a public key of the management-institution terminal 100 to be a submission destination, and the common key is decoded by using a private key saved in the management-institution terminal 100 alone, so that it is possible to safely submit a document to a management institution alone that is a submission destination of a user.

Next, when all required documents have been prepared, the management-institution terminal 100 submits the required documents to the support-institution terminal 50 so as to execute an application for a support program.

The support-institution terminal 50 exams whether or not to permit a user to join the support program on the basis of the submitted documents. After the examination, the support-institution terminal 50 informs the management-institution terminal 100 of an examination result.

The management-institution terminal 100 informs the user terminal 10 of the received examination result via the information processing device 1.

Next, with reference to FIG. 7, a screen example to be displayed on the user terminal 10 will be explained. FIG. 7 is a diagram illustrating a screen example displayed on the user terminal 10. In FIG. 7, there is displayed a submission status of documents when a user is applying for a support program.

When being informed of presence of a support program(s) from the management-institution terminal 100, the user terminal 10 logs in the support system S, and then displays the support program(s) on a list screen of support programs, which is illustrated in an upper part of FIG. 7.

Specifically, on the basis of information transmitted from the information processing device 1, the user terminal 10 displays, in the list screen of support programs, classification information 500 related to classification of support programs, explanation information 510 related to explanation of support programs, application buttons 520 for applying for support programs, and the like.

As illustrated in a lower part of FIG. 7, when a user depresses the application button 520 in a list screen of support programs, there is displayed a screen related to submission statuses of documents needed for an application of the support program.

Specifically, as illustrated in a lower part of FIG. 7, the user terminal 10 displays list information 530 on required documents, pieces of status information 540a and 540b indicating submission statuses of the respective documents, chat information 550 indicating conversation in SMS with a staff of a management institution to be a submission destination of the documents, and the like.

In the example illustrated in FIG. 7, the status information 540a is indicated to be already submitted, and the status information 540b is indicated to be non-submitted. When receiving a selecting operation (touch operation) of a user for the status information 540b, the user terminal 10 displays an upload screen (not illustrated) for uploading a corresponding document.

When the upload has been completed, in other words, when storing of documents in the storage ST and storing of a common key in the block chain BC have been completed, the information processing device 1 updates the status information 540b (non-submitted) to the status information 540a (already submitted), which are illustrated in a lower part of FIG. 7.

In other words, on the basis of information stored in the storage ST and the block chain BC, the information processing device 1 displays submission statuses of documents on a screen of the user terminal 10. Thus, it is possible to display precise submission statuses of documents on a screen of the user terminal 10.

Note that the information processing device 1 may display submission statuses of documents on a screen of the user terminal 10 on the basis of presence/absence of a common key (encrypted) stored in at least the block chain BC of the storage ST and the block chain BC.

There is illustrated, in the chat information 550, a case of conversation with respect to information related to a document to be submitted. Thus, a user and a management institution are able to easily share information related to documents to be submitted.

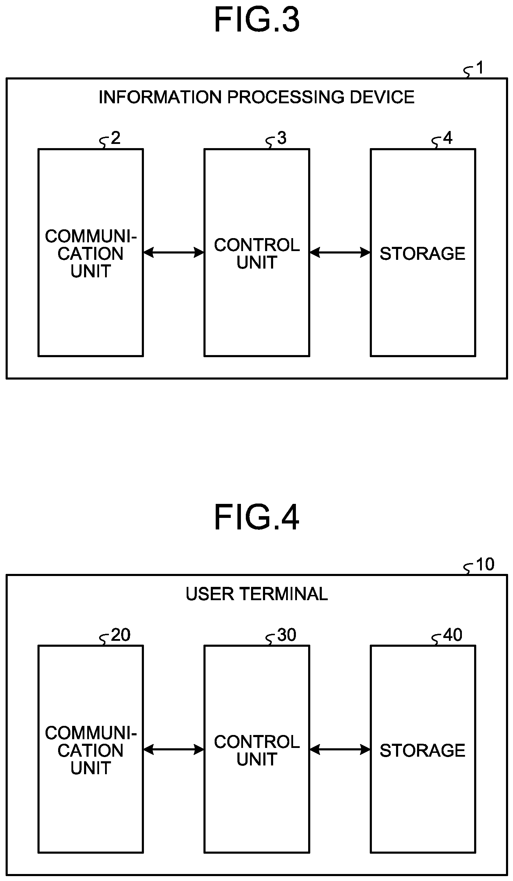

Next, with reference to FIGS. 3 to 6, configuration examples of the information processing device 1, the user terminal 10, the support-institution terminal 50, and the management-institution terminal 100 will be individually explained. FIG. 3 is a block diagram illustrating a configuration of the information processing device 1 according to the embodiment.

As illustrated in FIG. 3, the information processing device 1 includes a communication unit 2, a control unit 3, and a storage 4. The communication unit 2 is realized by, for example, a Network Interface Card (NIC) and the like. The communication unit 2 transmits and receives, via a predetermined network, information to and from the user terminal 10, the support-institution terminal 50, and the management-institution terminal 100.

The information processing device 1 includes a computer that includes, for example, a Central Processing Unit (CPU), a Read Only Memory (ROM), a Random Access Memory (RAM), a flash memory, an input/output port, and the like; and various circuits.

A CPU of the computer reads and executes, for example, a program stored in a ROM so as to function as the control unit 3. Specifically, the control unit 3 executes processes of the information processing device 1 illustrated in FIG. 2.

Moreover, at least a part or all of the functions of the control unit 3 may be constituted of hardware such as an Application Specific Integrated Circuit (ASIC) and a Field Programmable Gate Array (FPGA).

The storage 4 corresponds to a RAM and/or a flash memory, for example. The RAM and the flash memory are capable of storing therein information on various programs and the like. Note that the information processing device 1 may acquire, via another computer connected to a wired or wireless network or a portable recording medium, the above-mentioned programs and/or various kinds of information.

FIG. 4 is a block diagram illustrating a configuration of the user terminal 10 according to the embodiment.

As illustrated in FIG. 4, the user terminal 10 includes a communication unit 20, a control unit 30, and a storage 40. The communication unit 20 is realized by, for example, a Network Interface Card (NIC) and the like. The communication unit 20 transmits and receives, via a predetermined network, information to and from the information processing device 1, the support-institution terminal 50, and the management-institution terminal 100.

The user terminal 10 includes a computer that includes, for example, a Central Processing Unit (CPU), a Read Only Memory (ROM), a Random Access Memory (RAM), a flash memory, an input/output port, and the like; and various circuits.

A CPU of the computer reads and executes, for example, a program stored in a ROM so as to function as the control unit 30. Specifically, the control unit 30 executes processes of the user terminal 10 illustrated in FIG. 2.

Moreover, at least a part or all of the functions of the control unit 30 may be constituted of hardware such as an Application Specific Integrated Circuit (ASIC) and a Field Programmable Gate Array (FPGA).

The storage 40 corresponds to a RAM and/or a flash memory, for example. The RAM and the flash memory are capable of storing therein information on various programs and the like. Note that the user terminal 10 may acquire, via another computer connected to a wired or wireless network or a portable recording medium, the above-mentioned programs and/or various kinds of information.

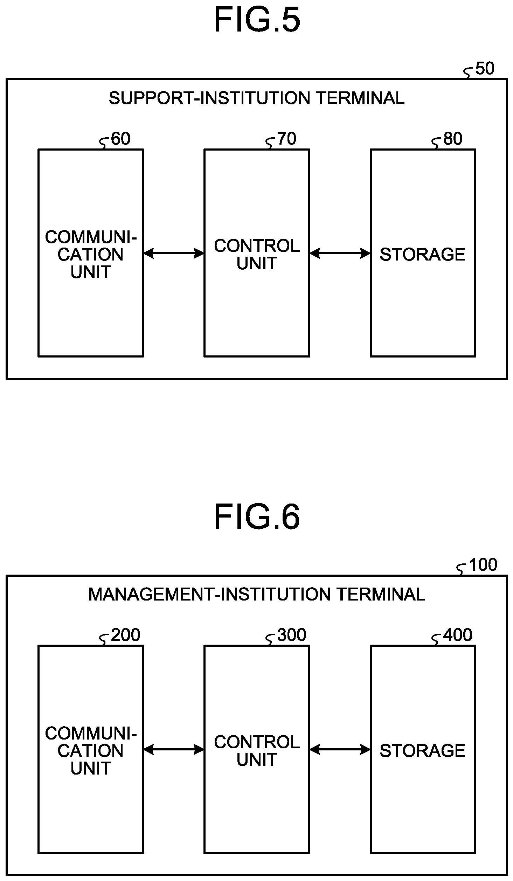

FIG. 5 is a block diagram illustrating a configuration of the support-institution terminal 50 according to the embodiment.

As illustrated in FIG. 5, the support-institution terminal 50 includes a communication unit 60, a control unit 70, and a storage 80. The communication unit 60 is realized by, for example, a Network Interface Card (NIC) and the like. The communication unit 60 transmits and receives, via a predetermined network, information to and from the information processing device 1, the user terminal 10, and the management-institution terminal 100.

The support-institution terminal 50 includes a computer that includes, for example, a Central Processing Unit (CPU), a Read Only Memory (ROM), a Random Access Memory (RAM), a flash memory, an input/output port, and the like; and various circuits.

A CPU of the computer reads and executes, for example, a program stored in a ROM so as to function as the control unit 70. Specifically, the control unit 70 executes processes of the support-institution terminal 50 illustrated in FIG. 2.

Moreover, at least a part or all of the functions of the control unit 70 may be constituted of hardware such as an Application Specific Integrated Circuit (ASIC) and a Field Programmable Gate Array (FPGA).

The storage 80 corresponds to a RAM and/or a flash memory, for example. The RAM and the flash memory are capable of storing therein information on various programs and the like. Note that the support-institution terminal 50 may acquire, via another computer connected to a wired or wireless network or a portable recording medium, the above-mentioned programs and/or various kinds of information.

FIG. 6 is a block diagram illustrating a configuration of the management-institution terminal 100 according to the embodiment.

As illustrated in FIG. 6, the management-institution terminal 100 includes a communication unit 200, a control unit 300, and a storage 400. The communication unit 200 is realized by, for example, a Network Interface Card (NIC) and the like. The communication unit 200 transmits and receives, via a predetermined network, information to and from the information processing device 1, the support-institution terminal 50, and the user terminal 10.

The management-institution terminal 100 includes a computer that includes, for example, a Central Processing Unit (CPU), a Read Only Memory (ROM), a Random Access Memory (RAM), a flash memory, an input/output port, and the like; and various circuits.

A CPU of the computer reads and executes, for example, a program stored in a ROM so as to function as the control unit 300. Specifically, the control unit 300 executes processes of the management-institution terminal 100 illustrated in FIG. 2.

Moreover, at least a part or all of the functions of the control unit 300 may be constituted of hardware such as an Application Specific Integrated Circuit (ASIC) and a Field Programmable Gate Array (FPGA).

The storage 400 corresponds to a RAM and/or a flash memory, for example. The RAM and the flash memory are capable of storing therein information on various programs and the like. Note that the user terminal 10 may acquire, via another computer connected to a wired or wireless network or a portable recording medium, the above-mentioned programs and/or various kinds of information.

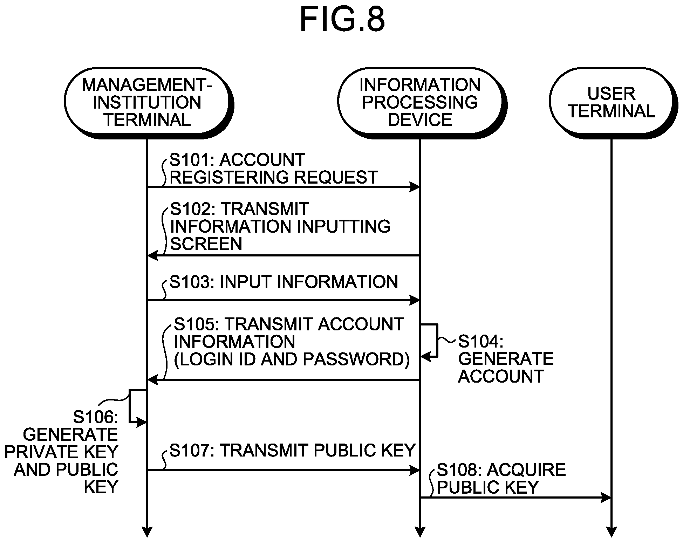

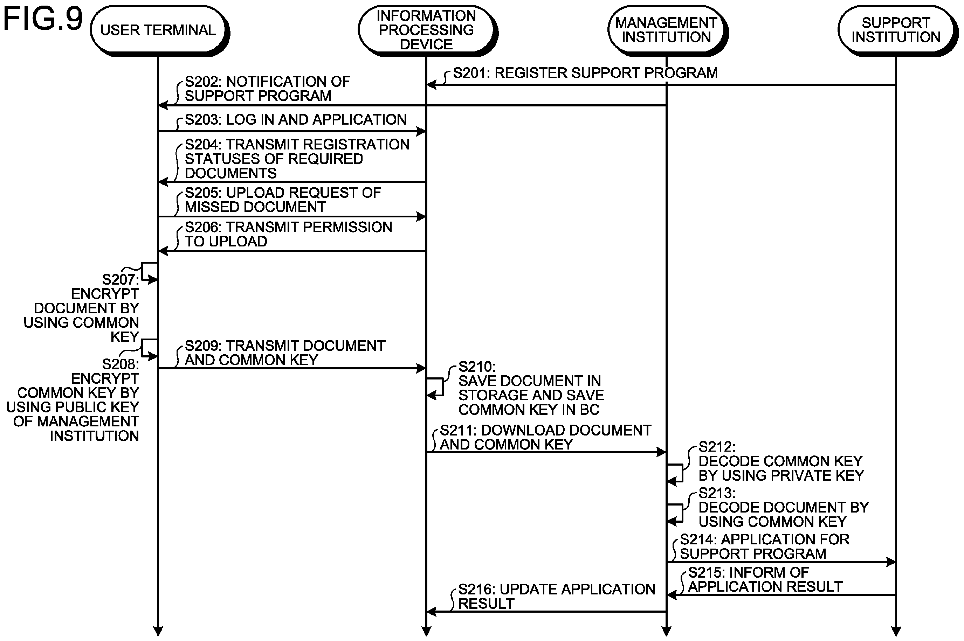

Next, with reference to FIGS. 8 and 9, operation examples of the support system according to the embodiment will be explained. FIGS. 8 and 9 are sequence diagrams illustrating operation examples of the support system S according to the embodiment.

An account registering process in the support system S will be explained with reference to FIG. 8.

As illustrated in FIG. 8, first, the management-institution terminal 100 executes an account registering request of the support system S in accordance with an operation of a user (staff of management institution) (Step S101).

Next, the information processing device 1 transmits, to the management-institution terminal 100 having received the account registering request, an information inputting screen for inputting user information and the like (Step S102).

Next, the management-institution terminal 100 transmits, to the information processing device 1, user information input by the user operation (Step S103).

Next, the information processing device 1 generates an account on the basis of the input user information (Step S104). Specifically, the information processing device 1 sets a login ID and a password for each account.

Next, the information processing device 1 transmits, to the management-institution terminal 100, account information including a login ID and a password (Step S105).

Next, when having acquired account information and an account registration have completed, the information processing device 1 generates a private key and a public key for each account (Step S106). Note that the information processing device 1 may additionally generate a private key and a public key when generating an account.

Next, the management-institution terminal 100 transmits the generated public key to the information processing device 1 (Step S107). Thus, a public key of the management-institution terminal 100 is shared with the user terminal 10.

Next, in accordance with a user operation, the user terminal 10 acquires a public key of the management-institution terminal 100 from the information processing device 1 (Step S108). Thus, a common key, which is encrypted by a user by using a public key of the management-institution terminal 100, is decoded by a private key of the management-institution terminal 100, and thus only a staff of a management institution is able to safely acquire the common key of the user.

Next, with reference to FIG. 9, an application process for a support program in the support system S will be explained.

As illustrated in FIG. 9, first, the support-institution terminal 50 registers a support program in the information processing device 1 (Step S201).

Next, the management-institution terminal 100 executes a notification of a support program on the user terminal 10 (Step S202). The management-institution terminal 100 may execute a notification of a support program via the information processing device 1.

Next, the user terminal 10 logs in the support system S, and further executes application for a support program selected by a user (Step S203).

Next, the information processing device 1 transmits information on registration statuses of required documents of the applied support program, and further displays the information on a screen of the user terminal 10 (Step S204).

Next, when there presents a missed document with respect to the required documents, the user terminal 10 executes, in accordance with a user operation, an upload request of the missed document on the information processing device 1 (Step S205).

Next, when there presents an upload request, the information processing device 1 transmits, to the user terminal 10, permission to upload (Step S206).

Next, the user terminal 10 generates a common key for each document to be uploaded, and encrypts the corresponding document to be uploaded by using the common key (Step S207).

Next, the user terminal 10 encrypts its own common key by using a public key of a management institution to which a document is to be transmitted (Step S208).

Next, the user terminal 10 transmits, to the information processing device 1, the encrypted document and the encrypted common key (Step S209).

Next, the information processing device 1 saves the encrypted document in a predetermined storage, and further saves the encrypted common key in a block chain (Step S210).

Next, the management-institution terminal 100 downloads the encrypted document and the encrypted common key (Step S211).

Next, the management-institution terminal 100 decodes the encrypted common key by using its own private key (Step S212).

Next, the management-institution terminal 100 decodes the encrypted document by using a common key decoded in Step S212 (Step S213).

Next, when all of the required documents have been prepared, the management-institution terminal 100 executes, on a support institution, an application for a support program (Step S214).

Next, the support-institution terminal 50 informs the management-institution terminal 100 of an application result (Step S215).

Next, the management-institution terminal 100 updates, on the basis of the application result, an application status for a support program having been uploaded to the information processing device 1 (Step S216).

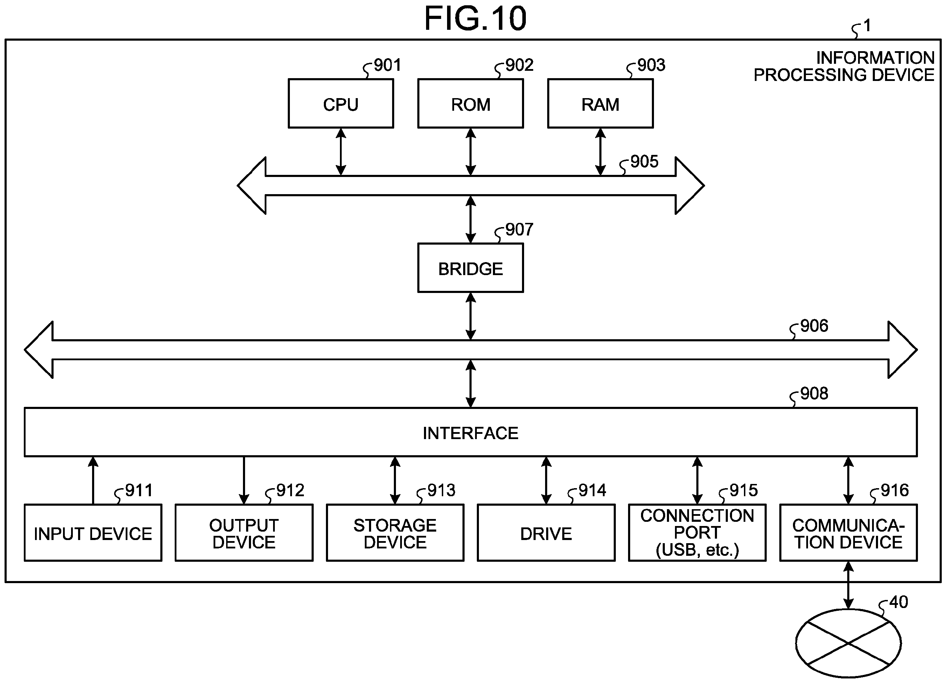

Next, with reference to FIG. 10, one example of a hardware configuration of the information processing device 1 according to the present embodiment and the like will be explained. FIG. 10 is a block diagram illustrating one example of a hardware configuration of the information processing device 1 according to the present embodiment. Note that the above-mentioned user terminal 10, the support-institution terminal 50, and the management-institution terminal 100 may be configured similarly to the hardware configuration of the information processing device 1.

As illustrated in FIG. 10, the information processing device 1 includes a Central Processing Unit (CPU) 901, a Read Only Memory (ROM) 902, a Random Access Memory (RAM) 903, a host bus 905, a bridge 907, an external bus 906, an interface 908, an input device 911, an output device 912, a storage device 913, a drive 914, a connection port 915, and a communication device 916. The information processing device 1 may include, instead of the CPU 901 or in addition thereto, a processing circuit such as an electric circuit, a DSP, and an ASIC.

The CPU 901 functions as a calculation processing device and controller so as to control, in accordance with various programs, all of the operations in the information processing device 1. Note that the CPU 901 may be a microprocessor. The ROM 902 stores therein programs, calculation parameters, and the like to be used by the CPU 901. The RAM 903 temporarily stores therein a program used in operation of the CPU 901, a parameter that is appropriately changed in the operation, and the like. The CPU 901 may execute functions of a reception unit 31, an extraction unit 32, a determination unit 33, a presenting unit 34, a measure-plan executing unit 35, and an intervention calculation unit 36, for example.

The CPU 901, the ROM 902, and the RAM 903 are connected to each other by the host bus 905 including a CPU bus and the like. The host bus 905 is connected, via the bridge 907, to the external bus 906 such as a Peripheral Component Interconnect/Interface (PCI) bus. The host bus 905, the bridge 907, and the external bus 906 need not to be separately configured, and functions thereof may be implemented on a single bus.

The input device 911 includes a device to which information is input by a user, such as a mouse, a keyboard, a touch panel, a button, a microphone, a switch, and a lever. Or the input device 911 may be a remote controlling device with the use of infrared ray or other electrical waves, or may be an auxiliary connection device such as a mobile telephone or a PDA corresponding to operation of the information processing device 1. Moreover, the input device 911 may include an input controlling circuit that generates an input signal on the basis of information input from a user by using the above-mentioned input means, for example.

The output device 912 is a device that is capable of visually or acoustically informing a user of information. The output device 912 may be a display such as a Cathode Ray Tube (CRT) display device, a liquid crystal display device, a plasma display device, an ElectroLuminescence (EL) display device, a laser projector, a Light Emitting Diode (LED) projector, and a lamp; or may be a sound outputting device such as a speaker and a headphone.

The output device 912 may output result obtained from various processes executed by the information processing device 1, for example. Specifically, the output device 912 may visually display result obtained from various processes executed by the information processing device 1 in various forms such as text, images, tables, and graphs. Or the output device 912 may convert an audio signal, such as sound data or acoustic data, into an analog signal, and acoustically output the converted signal. The input device 911 and the output device 912 may execute function of an interface, for example.

The storage device 913 is a device for storing data, which is configured as one example of the storage 4 of the information processing device 1. The storage device 913 may be realized by, for example, a magnetic storage device such as a Hard Disk Drive (HDD), a semiconductor storage device, an optical storage device, or a magneto-optical recording medium. For example, the storage device 913 may include a storage medium, a recording device that records data in the storage medium, a reading device that reads out data from the storage medium, a deletion device that deletes data recorded in the storage medium, and the like. The storage device 913 may store therein programs to be executed by the CPU 901, various data, various data acquired from the outside, and the like. The storage device 913 may execute function of storing therein causal information 41 and client information 42, for example.

The drive 914 is a reader writer for a storage medium, and is integrated with or externally provided to the information processing device 1. The drive 914 reads out information recorded in an installed removable storage medium such as a magnetic disk, an optical disk, a magneto-optical disk, and a semiconductor memory; and outputs the read information to the RAM 903. Additionally, the drive 914 is capable of writing information into the removable storage medium.

The connection port 915 is an interface that is connected to external devices. The connection port 915 is a connection port through which data is transmitted to and from an external device, and may be a Universal Serial Bus (USB), for example.

The communication device 916 is an interface that is constituted of a communication device for connecting to a network 920 and the like, for example. The communication device 916 may be a wired or wireless Local Area Network (LAN), a Long Term Evolution (LTE), Bluetooth (Registered Trademark), or a communication card for a Wireless USB (WUSB), for example. The communication device 916 may be a router for optical communication, a router for an Asymmetric Digital Subscriber Line (ADSL), or a modem for various kinds of communication. The communication device 916 is capable of transmitting and receiving, in accordance with a predetermined protocol such as TCP/IP, signals to and from the Internet or another communication device, for example.

A network 40 is a wired or wireless transmission path of information. For example, the network 40 may include the Internet, a public switched telephone network such as a telephone network and a satellite communication network, various Local Area Networks (LAN) including Ethernet (Registered Trademark), a Wide Area Network (WAN), or the like. The network 920 may include a dedicated network such as an Internet Protocol-Virtual Private Network (IP-VPN).

Note that a computer program may be generated for exerting functions equivalent to those of the above-mentioned configurations of the information processing device 1 according to the present embodiment with respect to hardware built into the information processing device 1, such as a CPU, a ROM, and a RAM. Moreover, a storage medium storing therein the above-mentioned computer program may be provided.

Among the processes having been explained in the above embodiment, all or a part of the processes, which are explained to be automatically executed, may be manually executed. Alternatively, among the processes having been explained in the embodiment, all or a part of the processes, which are explained to be manually executed, may be automatically executed by using a well-known method. Moreover, any of the processing procedures, the specific appellations, and the information including various data and parameters, which are described in the specification and the accompanying drawings, may be arbitrarily changed if not otherwise specified. For example, the various kinds of information depicted in the accompanying drawings is not limited thereto.

The illustrated components of the devices are functionally conceptual, and thus they are not to be physically configured as illustrated in the drawings. Specific forms of distribution and integration of the configuration elements of the illustrated devices are not limited to those illustrated in the drawings, and all or some of the devices can be configured by separating or integrating the apparatus functionally or physically in any unit, according to various types of loads, the status of use, etc.

Any of the above-mentioned embodiments may be appropriately incorporated with each other within a consistent range with respect to processing details. The order of the orders illustrated in the flowcharts and the sequence diagrams according to the above-mentioned embodiment may be appropriately changed.

As described above, according to one embodiment of the present disclosure, the information processing device 1 includes the control unit 3 configured to: store, the block chain BC, a common key by using which information on a document including sensitive information on a user is encrypted; and based on information on the common key stored in the block chain BC, display a submission status of the document on a screen of the user terminal 10 that is used by the user.

Thus, it is possible to more appropriately inform of statuses of managed documents of a user.

The control unit 3 is configured to: based on an upload request transmitted from the user terminal 10 for the document, acquire the document encrypted by using the common key generated by the user terminal for each of documents; and store the acquired document in the storage ST.

Hence, documents are managed in an encrypted manner, so that it is possible to safely manage the documents.

The control unit 3 is configured to: acquire the common key encrypted by the user terminal 10 by using a public key; and store the acquired common key in the block chain BC.

Thus, a common key by using which a document is encrypted is encrypted by using a public key to be managed by the block chain BC, so that it is possible to safely manage the document and the common key.

The control unit 3 is configured to: transmit, to the user terminal 10, the public key of a management institution to be a submission destination of the document; acquire the common key encrypted by the user terminal 10 by using the public key; and store the acquired common key in the block chain BC.

Hence, an encryption process is able to be executed while specifying a submission destination, and thus the specified management institution alone is capable of decoding the document, so that it is possible to prevent leakage of the document to a third party.

The control unit 3 is configured to: when there presents an acquisition request for information on the document stored in the storage ST from the management-institution terminal 100, acquire, from the block chain BC, the information on the document stored in the storage ST and information on the common key by using which the document is encrypted; and transmit the acquired pieces of information to the management-institution terminal 100.

Thus, it is possible to reliably transmit a document and a common key to the management-institution terminal 100.

The information on the common key stored in the block chain BC includes information for identifying the management institution to be the submission destination of the document. The control unit 3 is configured to: when the information for identifying the management institution included in the acquisition request received from the management-institution terminal 100 coincides with the information for identifying the management institution included in the information on the common key, transmit the information on the common key to the management-institution terminal 100.

Thus, it is possible to prevent cases where an institution that is not a submission destination acquires a document, a third party having a malicious aim maliciously acquires the document, and the like, so that the document is able to be reliably transmitted to a management institution to be a submission destination.

The control unit 3 is configured to: in accordance with a request from the management-institution terminal 100, transmit, the user terminal 10, information indicating presence of a support program for supporting the user; and when there presents an application request for the support program from the user terminal 10, display a submission status of the document on a screen of the user terminal 10 based on the information on the common key stored in the block chain BC.

Thus, a user is able to easily grasp excess or deficiency of documents for applying for a support program.

The control unit 3 is configured to: as the submission status of the document, display classification information on the document, status information indicating a submission status for each of documents, and chat information indicating conversation with the management institution using an e-mail.

Hence, it is possible not only to precisely grasp documents to be submitted to a management institution, but also to prevent misunderstanding of information between a management institution and a user.

The information on the common key stored in the block chain BC includes information for identifying a sender of the document, information for identifying a submission destination of the document, and information on an access history to the information on the common key stored in the block chain BC.

Thus, it is possible to safely manage information on a common key stored in the block chain BC.

While preferable embodiments of the present disclosure have been described above in detail with reference to the attached drawings, the technical scope of the present disclosure is not limited thereto. It is obvious that those skilled in the technical field of the present disclosure could have conceived of various changes or modifications within the scope of the technical ideas described in the claims, and it is understood that those changes or modifications also reasonably belong to the technical scope of the present disclosure.

Furthermore, the effects described in the present specification are merely explanations or exemplifications, and are not limiting. In other words, the techniques according to the present disclosure may exert other effects that are obvious to those skilled in the art from the descriptions of the present specification, along with the above-described effects or instead of the above-described effects.

Configurations below also belong to the technical scope of the present disclosure.
(1) An information processing device including:
   a control unit configured to:
   store, in a block chain, a common key by using which information on a document including sensitive information on a user is encrypted; and
   based on information on the common key stored in the block chain, display a submission status of the document on a screen of a user terminal that is used by the user.
(2) The information processing device according to the above-mentioned (1), wherein
   the control unit is configured to:
   based on an upload request transmitted from the user terminal for the document, acquire the document encrypted by using the common key generated by the user terminal for each of documents; and
   store the acquired document in a storage.
(3) The information processing device according to the above-mentioned (1) or (2), wherein
   the control unit is configured to:
   acquire the common key encrypted by the user terminal by using a public key; and
   store the acquired common key in the block chain.
(4) The information processing device according to the above-mentioned (3), wherein
   the control unit is configured to:
   transmit, to the user terminal, the public key of a management institution to be a submission destination of the document;
   acquire the common key encrypted by the user terminal by using the public key; and
   store the acquired common key in the block chain.
(5) The information processing device according to the above-mentioned (4), wherein
   the control unit is configured to:
   when there presents an acquisition request for information on the document stored in a storage from a management-institution terminal, acquire, from the block chain, the information on the document stored in the storage and information on the common key by using which the document is encrypted; and
   transmit the acquired pieces of information to the management-institution terminal.
(6) The information processing device according to the above-mentioned (5), wherein
   the information on the common key stored in the block chain includes information for identifying the management institution to be the submission destination of the document, and
   the control unit is configured to:
      when the information for identifying the management institution included in the acquisition request received from the management-institution terminal coincides with the information for identifying the management institution included in the information on the common key, transmit the information on the common key to the management-institution terminal.
(7) The information processing device according to the above-mentioned (5) or (6), wherein
   the control unit is configured to:
   in accordance with a request from the management-institution terminal, transmit, to the user terminal, information indicating presence of a support program for supporting the user; and
   when there presents an application request for the support program from the user terminal, display a submission status of the document on a screen of the user terminal based on the information on the common key stored in the block chain.
(8) The information processing device according to any one of the above-mentioned (4) to (7), wherein
   the control unit is configured to:
   as the submission status of the document, display classification information on the document, status information indicating a submission status for each of documents, and chat information indicating conversation with the management institution using an e-mail.
(9) The information processing device according to any one of the above-mentioned (1) to (8), wherein
   the information on the common key stored in the block chain includes information for identifying a sender of the document, information for identifying a submission destination of the document, and information on an access history to the information on the common key stored in the block chain.
(10) An information processing method including:
   a control step of causing a processor to:
   store, in a block chain, a common key by using which information on a document including sensitive information on a user is encrypted; and
   based on information on the common key stored in the block chain, display a submission status of the document on a screen of a user terminal that is used by the user.
(11) An information processing program allowing a computer to function as :
   a control unit configured to:
   store, in a block chain, a common key by using which information on a document including sensitive information on a user is encrypted; and
   based on information on the common key stored in the block chain, display a submission status of the document on a screen of a user terminal that is used by the user.

### Reference Signs List

- 1: Information processing device
- 10: User terminal
- 50: Support-institution terminal
- 100: Management-institution terminal
- 2, 20, 60, 200: Communication unit
- 3, 30, 70, 300: Control unit
- 4, 40, 80, 400: Storage

## Claims

1. An information processing device comprising:
a control unit configured to:
store, in a block chain, a common key by using which information on a document including sensitive information on a user is encrypted; and
based on information on the common key stored in the block chain, display a submission status of the document on a screen of a user terminal that is used by the user.

2. The information processing device according to claim 1, wherein the control unit is configured to:
based on an upload request transmitted from the user terminal for the document, acquire the document encrypted by using the common key generated by the user terminal for each of documents; and
store the acquired document in a storage.

3. The information processing device according to claim 1, wherein the control unit is configured to:
acquire the common key encrypted by the user terminal by using a public key; and
store the acquired common key in the block chain.

4. The information processing device according to claim 3, wherein the control unit is configured to:
transmit, to the user terminal, the public key of a management institution to be a submission destination of the document;
acquire the common key encrypted by the user terminal by using the public key; and
store the acquired common key in the block chain.

5. The information processing device according to claim 4, wherein the control unit is configured to:
when there presents an acquisition request for information on the document stored in a storage from a management-institution terminal, acquire, from the block chain, the information on the document stored in the storage and information on the common key by using which the document is encrypted; and
transmit the acquired pieces of information to the management-institution terminal.

6. The information processing device according to claim 5, wherein
the information on the common key stored in the block chain includes information for identifying the management institution to be the submission destination of the document, and
the control unit is configured to:
when the information for identifying the management institution included in the acquisition request received from the management-institution terminal coincides with the information for identifying the management institution included in the information on the common key, transmit the information on the common key to the management-institution terminal.

7. The information processing device according to claim 5, wherein the control unit is configured to:
in accordance with a request from the management-institution terminal, transmit, to the user terminal, information indicating presence of a support program for supporting the user; and
when there presents an application request for the support program from the user terminal, display a submission status of the document on a screen of the user terminal based on the information on the common key stored in the block chain.

8. The information processing device according to claim 4, wherein the control unit is configured to:
as the submission status of the document, display classification information on the document, status information indicating a submission status for each of documents, and chat information indicating conversation with the management institution using an e-mail.

9. The information processing device according to claim 1, wherein
the information on the common key stored in the block chain includes information for identifying a sender of the document, information for identifying a submission destination of the document, and information on an access history to the information on the common key stored in the block chain.

10. An information processing method comprising:
a control step of causing a processor to:
store, in a block chain, a common key by using which information on a document including sensitive information on a user is encrypted; and
based on information on the common key stored in the block chain, display a submission status of the document on a screen of a user terminal that is used by the user.

11. An information processing program allowing a computer to function as :
a control unit configured to:
store, in a block chain, a common key by using which information on a document including sensitive information on a user is encrypted; and
based on information on the common key stored in the block chain, display a submission status of the document on a screen of a user terminal that is used by the user.
